Europäisches Patentamt

European Patent Office

Office européen des brevets

(19)

(11) Veröffentlichungsnummer: **0 381 023**
**A2**

## (12) EUROPÄISCHE PATENTANMELDUNG

(21) Anmeldenummer: 90101354.0

(22) Anmeldetag: 24.01.90

(51) Int. Cl.5: **B29C 45/00, A01G 9/02**

(30) Priorität: 01.02.89 DE 3902885

(43) Veröffentlichungstag der Anmeldung:
08.08.90 Patentblatt 90/32

(84) Benannte Vertragsstaaten:
AT BE CH DE DK ES FR GB GR IT LI LU NL SE

(71) Anmelder: **Riesselmann & Sohn**
**Brandstrasse**
**D-2842 Lohne/Riessel(DE)**

(72) Erfinder: **Kühling, Franz**
**Apfelweg 6**
**D-2842 Lohne(DE)**

(74) Vertreter: **Müller, Enno Johannes Heinrich et**
**al**
**Postfach 110451 Corneliusstrasse 45**
**D-5600 Wuppertal 11(DE)**

(54) Pflanzentopf-Herstellungsverfahren und nach diesem Verfahren erzeugte Produkte.

(57) Die Erfindung betrifft ein Verfahren zur Herstellung eines Pflanzentopfes im Kunststoff-Spritzverfahren, wobei an dem Topf im Bodenbereich ein einstückig angeformter Ringteller (5) ausgebildet wird, zumindest teilweise bezüglich der Topfwandung (1) in Form einer nach oben öffnenden Doppelschale (6), welcher Ringteller (5) zur Aufnahme überschüssiger Gießflüssigkeit dient und schlägt zur Erzielung gebrauchsstabiler Ringteller- und Doppelboden-Pflanzentöpfen in wirtschaftlicher Weise ohne Rückgriff auf komplizierte Spritzformen vor, daß der Ringteller einstückig mit dem Topf gespritzt wird, wobei die Beweglichkeit des Schalenrandes vorteilhaft ausgenutzt wird.

FIG.6

EP 0 381 023 A2

## Pflanzentopf-Herstellungsverfahren und nach diesem Verfahren erzeugte Produkte

Die Erfindung bezieht sich auf ein Verfahren zur Herstellung eines Pflanzentopfes im Kunststoff-Spritzverfahren, wobei an dem Topf im Bodenbereich ein einstückig angeformter Ringteller ausgebildet ist, zumindest teilweise bezüglich der Topfwandung in Form einer nach oben öffnenden Doppelschale, welcher Ringteller zur Aufnahme überschüssiger Gießflüssigkeit dient.

Die überschüssige Gießflüssigkeit fließt durch in der Topfwandung berücksichtigte Durchbrechungen. Die Mitanformung der einen Ringteller bildenden Doppelschale bedingt eine relativ komplizierte Spritzform. Da überdies ein die Randschärfe nehmender Kümpelrand berücksichtigt wird, muß die Außenform der Spritzform einen zusammenfallenden Aufbau haben. Entsprechend fallen die Taktzeiten für einen solchen Massenartikel wie Pflanzentöpfe, relativ lang aus.

Die klassische Ausbildung von Pflanzentöpfen besteht in der Zweiteiligkeit, um insbesondere zur Doppelbodengestalt zu gelangen. Die untertellerartige Doppelschale wird dem Topfkörper im Wege der Klipsverbindung zugeordnet. Solche Lösungen haben den Nachteil, daß grundsätzlich mit zwei Kunststoffspritzformen gefahren werden muß. Hinzu kommt dann noch die Montage.

Aufgabe der Erfindung ist es, ein Verfahren anzugeben, welches in wirtschaftlicher Weise zu gebrauchsstabilen Ringteller- bzw. Doppelboden-Pflanzentöpfen führt, ohne auf komplizierte Spritzformen zurückgreifen zu müssen.

Gelöst ist diese Aufgabe durch das im Anspruch 1 angegebene Verfahren und bei einem Pflanzentopf gemäß Anspruch 4.

Die Unteransprüche stellen vorteilhafte Weiterbildungen dar.

Erfindungsgemäß ist verfahrensmäßig vorgesehen, daß der Ringteller einstückig mit dem Topf gespritzt wird und hierbei, gemäß einer ersten Variante, anschließend die im erwärmten Zustand gegebene Beweglichkeit des Schalenrandes des Ringtellers zum Herausziehen eines geteilten Querschiebers genutzt wird. Die entsprechende Teilung des Querschiebers macht den Weg frei für die Zwangsentformung des den Ringteller mitformenden anderen Querschieberteils. Der im Entformungsweg liegende Abschnitt des Produkts weicht aus und schnellt wieder in seine formungsgetreue Lage zurück. Unter Anwendung des Lösungsprinzips des einteiligen Spritzens des Ringtellers wird gemäß einer Verfahrensvariante so vorgegangen, daß der Ringteller als gegensinnig zum Topf öffnende Schale gespritzt wird und anschließend umgestülpt wird in eine gleichsinnig mit dem Topf öffende Schale. Dieses Umstülpen kann zunächst unmittelbar im Anschluß an den Spritzvorgang unter Ausnutzung der im erwärmten Zustand gegebenen Beweglichkeit vorgenommen werden. Gemäß einer weiteren vorteilhaften Ausgestaltung ist vorgesehen, daß die Umstülpung erst im erkalteten Zustand vorgenommen wird. Hierbei hat es sich gegenständlich, wie weiter unten auch noch im einzelnen erläutert, als vorteilhaft erwiesen, den Rand des Ringtellers, der umzustülpen ist, in einem Winkel von ca. 15-30° zu einer Mittelachse des Topfes bzw. zu einer Senkrechten anzuordnen. Weiter hat es sich als vorteilhaft erwiesen, die Wandstärke des Ringtellers in einem Bereich von 0,8-1 mm vorzusehen, wobei in der Gelenkzone, im Übergang des Randes in den Ringtellerboden, eine Wandstärkenreduzierung auf ca. 0,3-0,7 mm vorgesehen ist. Dies beispielsweise bei einem Werkstoff aus Polypropylen. Die mehr oder weniger bezüglich der Topfwandung in Form einer nach oben öffnenden Doppelschale erzielte Struktur läßt sich über den Einsatz üblicher Querschieber erzeugen, wobei auch die Kern-Teile der Kunststoffspritzform unter Entformungsgesichtspunkten optimal gestaltet werden können. Bei dem Umstülpen des Schalenrandes in Gegenrichtung wird ein die neue Lage sichernder Totpunkt übersprungen, so daß in Bezug auf die Formentreue des Fertigproduktes keinerlei Nachteile gegenüber konventionell angeformten Ringtellern bestehen. Das Umstülpen braucht dabei in keiner Weise gleichzeitig an allen Umfangspunkten des Ringtellers vorgenommen zu werden, es genügt, wenn eine Seite umgestülpt wird, wobei sich die Umstülpung nahezu selbständig in Umfangsrichtung fortsetzend überschnappend beendet.

Bei einem nach diesem Verfahren erzeugten Pflanzentopf mit einem den Topfboden unterfangenden Doppelboden, der im Randbereich zur Ausbildung einer Schale nach oben öffnend gekrümmt ist, welche Schale zum Auffangen überschüssiger Gießflüssigkeit dient, wozu der Topfboden Durchtrittsöffnungen enthält, erweist es sich als vorteilhaft, daß der Doppelboden einstückig an den Topfboden angeformt ist. Je näher die Anbindung im Zentrum des Bodens liegt, je volumengrößer wird die sich entsprechend unter den Topfboden fortsetzende, untertellerartige Doppelschale. Um zu einer raumsparenden Stapelfähigkeit solcher Pflanzentöpfe zu gelangen, wird weiter vorgeschlagen, daß die Topfwandung im Querschnitt im Bereich des gekrümmten Randes des Doppelbodens stufenförmig eingezogen ist, unter im wesentlichen gleichbleiben den Abstand zum Schalenrand. Hieraus erwächst sogar eine Doppelfunktion, da durch die eingezogene Topfwandung eine bodennahe, definierte Stützschulter für den eingeschachtelten nächsten Pflanzentopf vorliegt. Das vermeidet Wandungsverklemmungen, die das Entschachteln erschweren würden. Vorteilhaft ist es weiter, daß der Doppelboden in einem zentralen Bereich des Topfbodens wurzelt. Die zentrale Lage kann so extrem gewählt werden, daß sich der Wurzelbereich praktisch auf eine Art Anspritzpunkt-Einziehung beschränkt. Den erforderlichen verkippungsfreien Zustand der miteinander verbundenen Funktionsteile Topf und Ringteller können belassene Radialstege übernehmen. Diese lassen sich spritztechnisch leicht mitberücksichtigen. Unter Berücksichtigung der etagenartigen, vertikal beabstandeten Zuordnung von Schalenboden und Topfboden liegt eine Ausgestaltung vor derart, daß ausgehend von dem zentralen Bereich des Topfbodens rotationssymmetrisch sich gabelnde Spritzwege ausgebildet sind. Eine nahezu unauffällige Anformung des Doppelbodens, respektive des Ringtellers ergibt sich, wenn die weitere Ausbildung so gewählt wird, daß der gekrümmte Randbereich konturenmäßig mit einer gedachten Verlängerung der Topfwandung fluchtet. Die verbleibende Spaltfuge zwischen dem Rand des Doppelbodens und der sich darüber befindlichen Stufenkante fällt optisch kaum ins Gewicht. Endlich besteht noch ein vorteilhaftes Merkmal der Erfindung darin, daß die Ringteller-Wandung eine stärkere Krümmung aufweist als der korrespondierende Topfwandungsabschnitt. Mit anderen Worten: Es lassen sich hinterschneidungsartige Umstülpprofile erzeugen. Bevorzugt ist es bei dem Pflanzentopf bezüglich des Ringtellers bzw. der Schale, daß der Rand des Ringtellers im gespritzten Zustand bzw. im umgestülpten Zustand mit der Mittelachse des Topfes einen Winkel von ca. 15-30° einschließt. Weiter bevorzugt ist, daß die Wandstärke der Schale etwa im Bereich von 0,8-1 mm liegt unter Reduzierung in der Umstülpzone bzw. in der Gelenkzone auf 0,3-0,7 mm, dies bei einem Polypropylen-Werkstoff.

Nachstehend ist die Erfindung in verfahrensmäßiger sowie gegenständlicher Hinsicht weiter anhand der beigefügten Zeichnung erläutert, wobei im einzelnen zeigt:

Fig. 1 den erfindungsgemäßen Pflanzentopf gemäß einem ersten Ausführungsbeispiel, und zwar in Seitenansicht,

Fig. 2 den erfindungsgemäßen Pflanzentopf gemäß einem zweiten Ausführungsbeispiel, ebenfalls in Seitenansicht,

Fig. 3 eine Draufsicht des Pflanzentopfes gemäß zweitem Ausführungsbeispiel,

Fig. 4 den Schnitt gemäß Linie IV-IV in Fig. 3, und zwar einen Stapelsatz verdeutlichend,

Fig. 5 einen der Fig. 4 entsprechenden Schnitt, in Strich-Punkt-Punkt-Linienart die Entformungssituation wiedergebend,

Fig. 6 einen der Fig. 4 entsprechenden Vertikalschnitt durch den Pflanzentopf gemäß Fig. 1, den Entformungszustand in strichpunktierter Linienart darstellend,

Fig. 7 einen Vertikalschnitt durch einen Pflanzentopf gemäß drittem Ausführungsbeispiel, und zwar unter Abwandlung des Doppelboden-Bereichs,

Fig. 8 diesen Pflanzentopf, den Entformungszustand in strich-punkt-punktierter Linienart darstellend, und zwar unter Anwendung eines geteilten Querschiebers, und

Fig. 9 eine weitere Querschnittsdarstellung durch einen Pflanzentopf, entsprechend Fig. 5, mit Gelenkausbildung.

Die dargestellten Pflanzentöpfe werden im Kunststoffspritzverfahren hergestellt. Das Material ist thermisch ansprechend, beispielsweise Polypropylen.

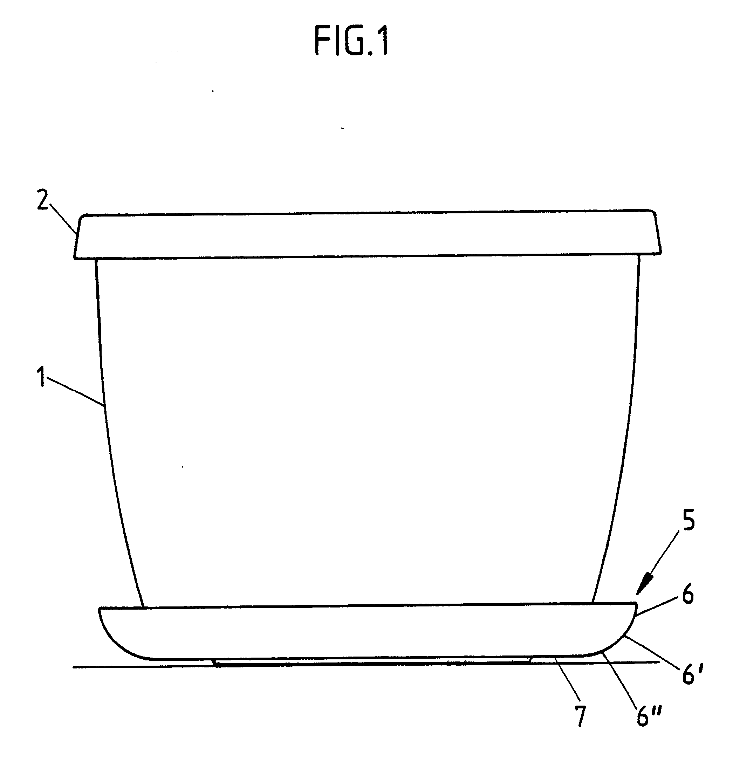

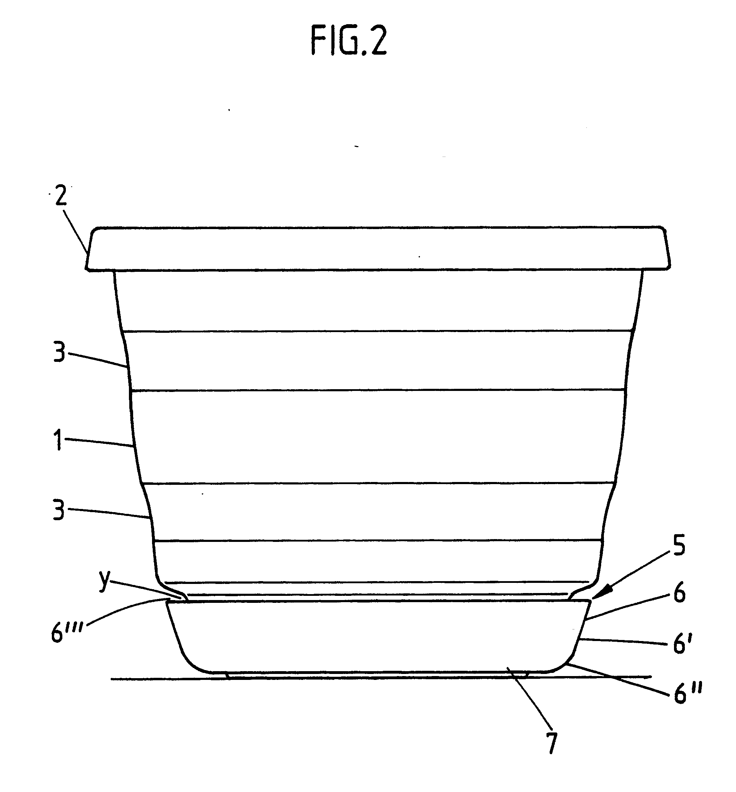

Beim Ausführungsbeispiel gemäß Fig. 1 liegt ein schwach bauchförmiger Verlauf der Topfwandung 1 vor, während die Topfwandung 1 gemäß dem Ausführungsbeispiel nach Fig. 2 einen schwach konischen Verlauf nimmt. In beiden Fällen weitet sich die Topfwandung 1 nach oben hin, um dort in einen stabilisierenden Faltrand 2 überzugehen. Die Rand-Stirnfläche weist nach unten.

Der Pflanzentopf gemäß Fig. 2 weist horizontale Wellungen bzw. axial beabstandete Ringmulden 3 auf.

Der im wesentlichen horizontal ausgerichtete Topfboden 4 weist im Bodenbereich einen dem Pflanzentopf einstückig angeformten Ringteller 5 auf. Dieser dient zur Aufnahme überschüssiger Gießflüssigkeit. Von dort her kann auch das Begießen erfolgen.

Der einer Untertasse vergleichbare Ringteller 5 führt in Bezug auf die Topfwandung 1 zu einer zumindest teilweise nach oben öffnenden Doppelschale 6.

Beim Ausführungsbeispiel gemäß Fig. 2 ist die entsprechende doppelbodenartige Ausgestaltung besonders markant realisiert.

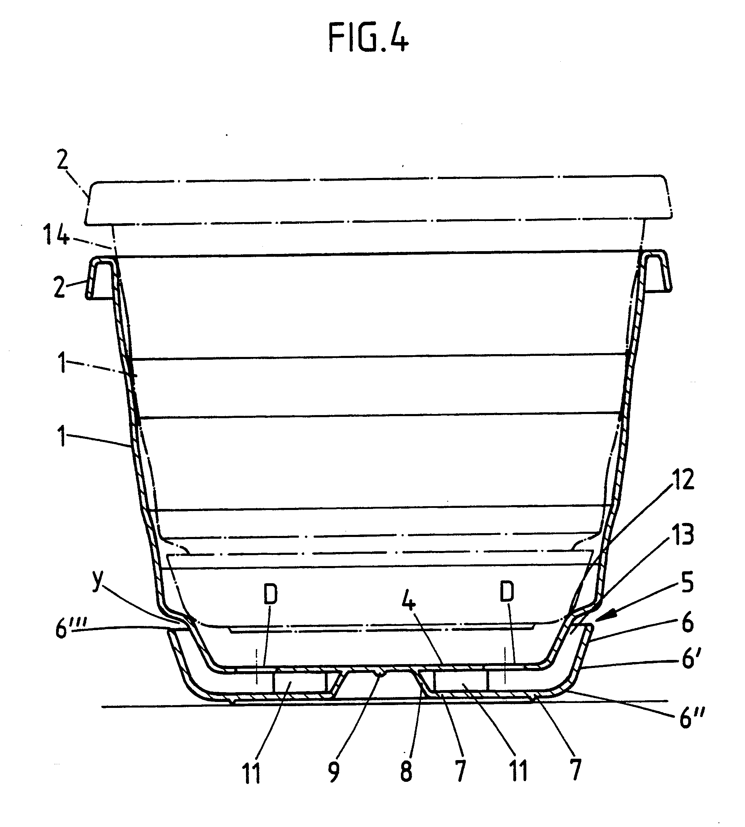

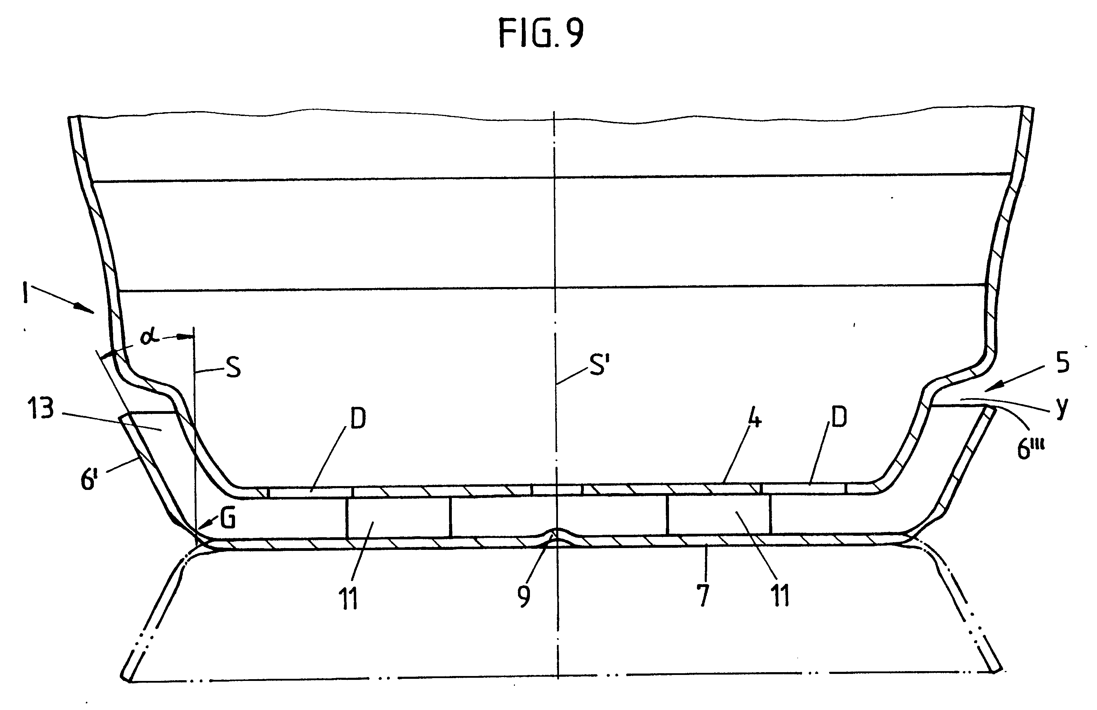

In beiden Ausführungsformen wird der Ringteller 5 bevorzugt, bzw. bei der Ausführungsform gemäß den Fig. 4, 5, 7, 8 und 9 ausschließlich als gegensinnig zum Topf öffnende Schale Sch einstückig mit dem Topf gespritzt. Die Schale kann anschließend gemäß einer Variante unter Nutzung der im erwärmten Zustand gegebenen Beweglichkeit des Schalenrandes 6' zur Ausbildung des Ringtellers 5 umgestülpt werden. Die Umstülpung kann allleridngs auch im kalten Zustand erfolgen, wie dies im Bezug auf die dazu bevorzugte Ausführungsform gemäß Fig. 9 weiter unten noch im einzenen erläutert ist. Die Umstülprichtung ist in den Zeichnungen mit Pfeil x verdeutlicht; sie weist nach oben.

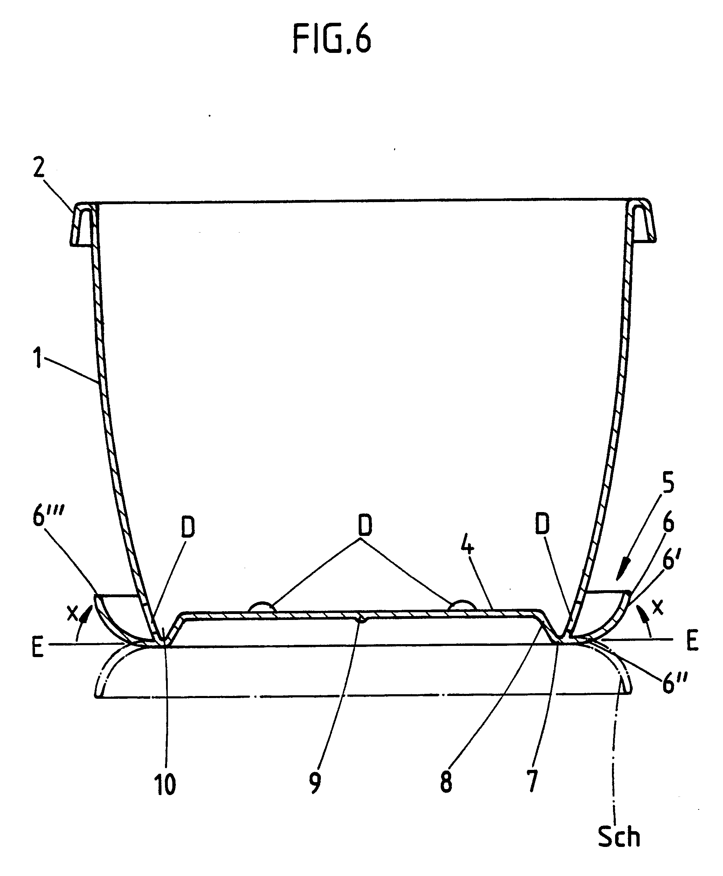

Die Ausführungsform gemäß den Fig. 1 und 6 kann auch einstückig gespritzt werden im nach oben geöffneten, also gleichsinnig zu dem Topf geöffneten Richtung des Schalenrandes. Hierbei unter Ausnutzung der im erwärten Zustand gegebenen Beweglichkeit, wobei trotz gegebener Hinterschneidung und stärkerer Krümmung des Schalenrandes gegenüber der Topfwandung die im erwärten Zustand gegebene Beweglichkeit ausreichend ist. um geteilte Querschieber herauszuziehen.

Im erwärmten Zustand weist das verwendete Kunststoffmaterial noch eine gewisse Weichheit auf. die Rißbildungen vermeidet, so daß im umgestülpten Zustand eine dem klassischen Anspritzen vergleichbare saubere rotationssymmetrische Kontur erreicht ist. Die vom Boden 7 der Schale Sch definierte Ebene E-E bildet eine Art Totpunktebene, die der nach oben hin umgestülpte Schalenrand 6' unter normalen mechanischen Beanspruchungen nicht mehr in Gegenrichtung überschreiten kann. Wie den Darstellungen entnehmbar, geht der Schalenrand 6' über eine gefällige Querrundung 6" in den Schalenboden 7 der Doppelschale 6 über.

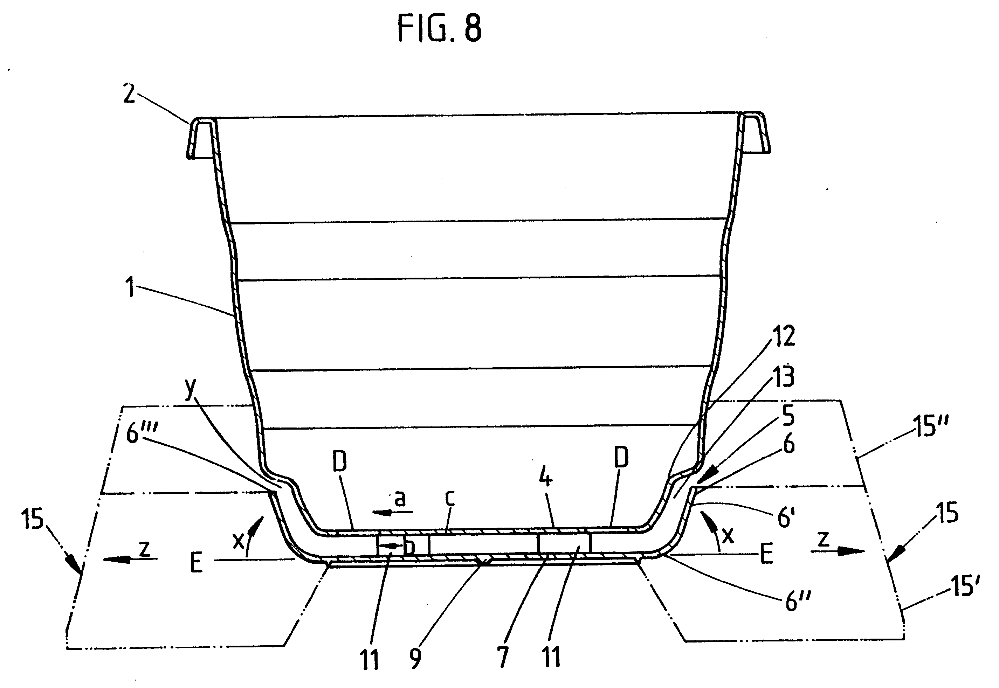

Beim Verfahren gemäß Fig. 8 wird so vorgegangen. daß der Ringteller 5 auch einstückig mit dem Topf gespritzt wird und anschließend die im erwärmten Zustand gegebene Beweglichkeit des Schalenrandes 6' des Ringtellers zum Herausziehen eines geteilten Querschiebers genutzt wird. Der Gesamtschieber trägt dort das Bezugszeichen 15. Der untere Querschieberteil ist mit 15' bezeichnet. Er formt die äußere Wandung des Schalenrandes 6' und endet folglich mit seiner Oberseite auf Höhe des Stirnrandes 6" dieses Schalenrandes 6'. Hierüber erstreckt sich der obere Querschieberteil 15". Sobald der untere Querschieberteil 15' in Richtung des Pfeiles z, also parallel zum ebenen Verlauf des Topfbodens 4 radial abgezogen ist, liegt genügend Freiraum außenseitig des Schalenrandes 6' vor, um dann unter sogenannter Zwangsentformung den oberen Querschieberteil 15" in gleicher Richtung z radial abzuziehen. Die nach oben öffnende Schrägstellung des Schalenrandes 6' begünstigt diese Abzugbewegung. Sobald der Querschieber 15 freiliegt, schnellt dieser Rand in die aus Fig. 8 ersichtliche Position zurück. Die Bezugsziffern sind ansonsten sinngemäß angewandt.

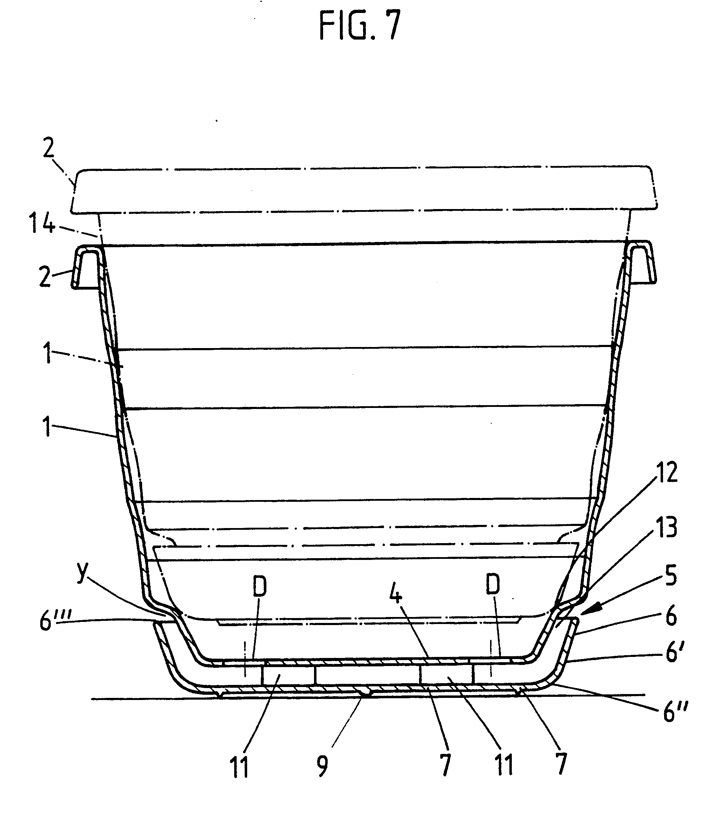

Der durch die einstückig dem Topfboden 4 angeformte Schale Sch erzielte Doppelboden - der Topfboden 4 fungiert als Zwischenboden - wurzelt gemäß Ausführungsbeispiel Fig. 1 und 6 im Bereich des unteren Randes der Topfwandung 1, beim anderen Ausführungsbeispiel jedoch in einem zentralen Bereich des Topfbodens 4. Dort geht der den Doppelboden bildende Schalenboden 7 über einen kegelstumpfartigen Ringwandungsabschnitt 8 in den besagten Topfboden 4 über. Die Verjüngung ist nach oben gerichtet. Dieser, von der Standfläche des Topfes aus gesehen nach oben eingezogene zentrale Bereich könnte den mit 9 bezeichneten Anspritzpunkt bilden. Das führt, ausgehend von dem zentralen Bereich, respektive Anspritzpunkt 9 des Topfbodens 4 zu rotationssymmetrisch sich gabelnden, radial gerichteten Spritzwegen gemäß Pfeil a und b. Diese verlaufen, im bodenbildenden Bereich parallel beabstandet. Der ringförmige Gabelpunkt ist mit c bezeichnet. Der Weg b schließt an den Ringwandungsabschnitt 8 an. Der Pflanzentopf gemäß den Fig. 7 und 8 unterscheidet sich gegenüber der Lösung nach Fig. 4 auch noch dadurch, daß hier auf den Topf und Schale verbindenden, kegelstumpfartigen Ringwandungsabschnitt 8 verzichtet ist. Topfboden 4 und Schalenboden 7 verlaufen durchgehend horizontal und axial beabstandet. Als Materialbrücken fungieren hier nachfolgend weiter erläuterte Stützstege 11. Der Anspritzpunkt 9 liegt nun zentral am Schalenboden 7.

Beim Ausführungsbeispiel gemäß den Fig. 1 bis 5 liegt ebenfalls eine nach oben gerichtete domartige Ausbildung vor mit gleichfalls zentralliegendem Anspritzpunkt 9. Dort ist der entsprechende Wandungsabschnitt 8 jedoch in eine größere Nähe zur Topfwandung 1 verlegt, allerdings unter Belassung einer davor liegenden topfinnenseitigen Ringrinne 10. Auf dem Grund der Ringrinne 10 beginnen die die Fließverbindung zum Ringteller 5 sicherstellenden Durchtrittsöffnungen D. Der Topfboden 4 ist hier folglich als nach oben gerichtete Einziehung realisiert.

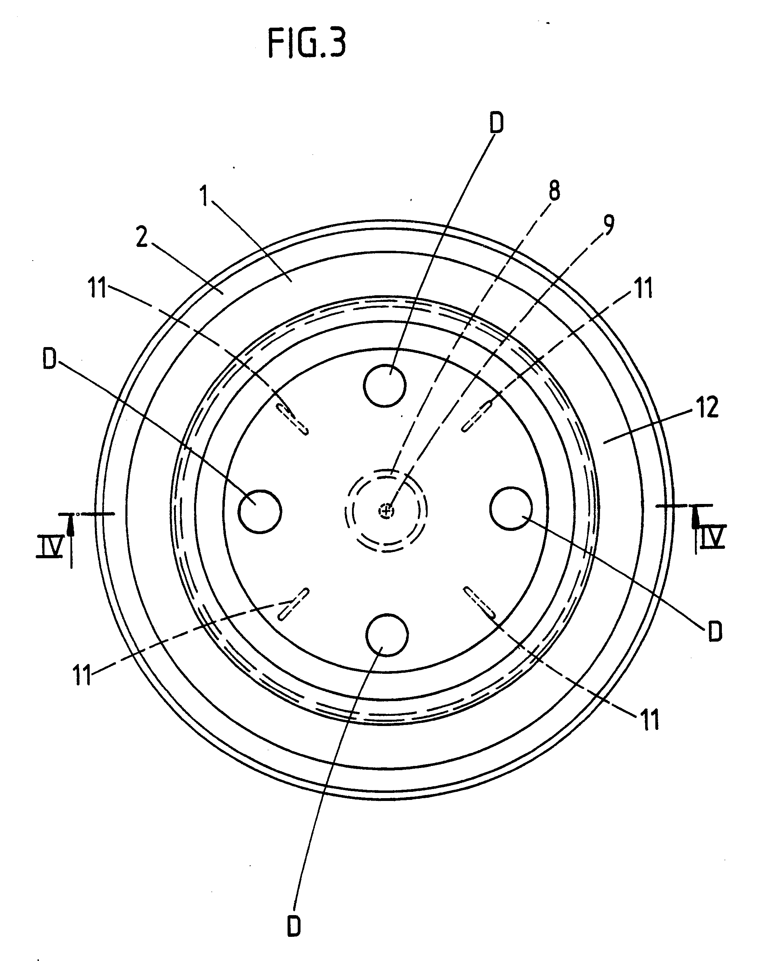

Beim Ausführungsbeispiel gemäß den Fig. 2 ff sind die Durchtrittsöffnungen D innerhalb des Topfbodens ausgebildet, und zwar in winkelgleicher Anordnung, wie dies aus Fig. 3 hervorgeht. Wie erkennbar, sind insgesamt dort vier Durchtrittsöffnungen D verwirklicht. In den Winkelhalbierenden zwischen jeweils zwei Durchtrittsöffnungen D befinden sich die schon erwähnten Stützstege 11. Letztere nehmen einen radialen Verlauf. So liegt außer der zentralen Anbindung der Doppelschale 6 eine mehr nach auswärts gerichtete, stabilisierend wirkende vielfache Materialbrücke zwischen dem Topfboden 4 und dem Schalenboden 7. Die in der Topfwandung 1 liegenden, radialweisenden Durchtrittsöffnungen D lassen sich formspritztechnisch günstigst erzeugen, da in der Spritzstellung dieser Weg frei ist zufolge des nach unten weisenden Schalenrandes 6'; durch Umklappen des Schalenrandes 6' werden die Durchbrechungen D durch diesen der Sicht entzogen verdeckt.

Die Ausführungsbeispiele gemäß Fig. 4 und 7 sind im Hinblick auf eine raumsparende Ineinanderschachtelung bzw. Stapelung von Pflanzentöpfen ausgebildet. Hierzu ist die nach auswärts gerichtete, exponierte Lage des Ringtellers 5 gemäß Fig. 1 bzw. 6 aufgegeben und die Ausgestaltung dahingehend vorgenommen, daß die Topfwandung 1 im Querschnitt im Bereich des gekrümmten Schalenrandes 6' des Doppelbodens sprich Schalenbodens 7 stufenförmig eingezogen ist, unter im wesentlichen gleichbleibendem Abstand zu dem Schalenrand 6'. Die durch die stufenförmige Einziehung gebildete Ringschulter trägt das Bezugszeichen 12. Der entsprechende Wandungsversatz in diesem unteren Schalenrandbereich führt in Nähe des Topfbodens 4 zu einer rotationssymmetrischen Nische 13.

Der Stirnrand 6''' des Schalenrandes 6' endet unter Belassung eines vertikalen Ringspaltes y vor der Unterseite der Ringschulter 12. Besagter Ringspalt ist so groß, daß von dort her Gießwasser eingebracht werden kann, beispielsweise für solche Pflanzen, bei denen eine von unten her erfolgende Benetzung vorzuziehen ist.

Der Schalenrand 6' fluchtet erkennbar konturengleich mit einer gedachten Verlängerung der Topfwandung 1.

Die geschaffene Ringschulter 12 bildet desweiteren die Aufstützfläche für den in strickpunktierter Linienart dargestellten, stapelartig eingeschachtelten nächsten Pflanzentopf. Dabei sind Höhe und Konizität der Teile so abgestimmt, daß eine leicht haftende, jedoch nicht fest klemmende Aneinanderlage der Topfwandungen 1 vorliegt.

Die vertikalen Abstände der Faltränder 2 sind so, daß zur Entnahme des eingestapelten Pflanzentopfes ein genügender Untergreifraum 14 verbleibt.

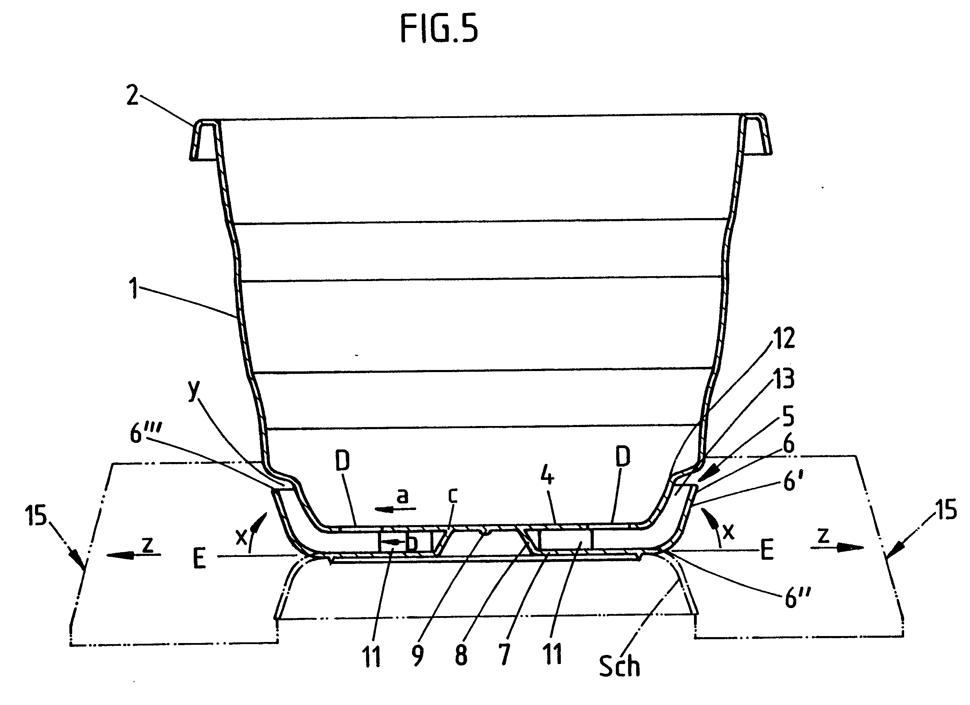

In Fig. 5 sind die radial in Pfeilrichtung z abziehbaren Querschieber 15 der ansonsten nicht näher dargestellten Spritzform in Strich-Punkt-Punkt-Linien eingezeichnet. Vorzugsweise wird eine Viererteilung gewählt, dies im Interesse einer belastungsfreien Entformung im Hinblick auf die radial ausgerichteten Stützstege 11.

Die Umstülpung kann sogar so weitreichend sein, daß sie Hinterschneidungsstruktur besitzt, die mit dem klassischen Entformen nicht oder nur problematisch erreichbar wäre, bspw. mit zusammenfallenden Kernen. Eine entsprechende Ausgestaltung, bei der die Ringteller-Wandung eine stärkere Krümmung aufweist als der korrespondierende Topfwandungsabschnitt ist zeichnerisch jedoch nicht wiedergegeben.

Die Pflanzentöpfe können auch als sog. Ampeltöpfe ausgebildet sein. Dazu würde der Faltrand 2 bspw. drei Aus klinkungen aufweisen zum Eingriff von Traghaken einer pyramidal Tragstreben oder -Ketten aufweisenden ausgerichtete Aufhängevorrichtung.

Mit Bezug zu Fig. 9 ist eine Ausführungsvariante erläutert, die sich insbesondere auch dazu eignet, den Schalenrand 6' im erkalteten Zustand umzustülpen. Hierzu ist vorgesehen, daß die Wandstärke des Schalenrandes zwischen ca. 0,8 und 1 mm liegt, vorzugsweise etwa bei 1 mm, und die Wandstärke im Gelenkbereich G etwa zwischen 0,3 und 0,7 mm, bevorzugt etwa bei 0,5 mm. Die Wandungsstärkenreduzierung ist dabei bevorzugt weiter so vorgenommen, daß im Spritzzustand als von innen abgetragen erscheint. Darüber hinaus ist vorgesehen, daß der Schalenrand 6' mit einer Senkrechten S bzw. mit einer Mittelsenkrechten oder Rotatiosachse des rotationssymmetrischen Topf S' einen Winkel von ca. 15-30°, bevorzugt etwa 30° einschließt.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Ansprüche

1. Verfahren zur Herstellung eines Pflanzentopfes im Kunststoff-Spritzverfahren wobei an dem Topf im Bodenbereich ein einstückig angeformter Ringteller (5) ausgebildet wird, zumindest teilweise bezüglich der Topfwandung (1) in Form einer nach oben öffnenden Doppelschale (6), welcher Ringteller (5) zur Aufnahme überschüssiger Gießflüssigkeit dient, dadurch gekennzeichnet, daß der Ringteller (5) einstückig mit dem Topf gespritzt wird, unter Ausnutzung einer gegebenen Beweglichkeit des Schalenrandes.

2. Verfahren zur Herstellung eines Pflanzentopfes im Kunststoff-Spritzverfahren, dadurch kennzeichnet, daß der Ringteller (5) mit dem Topf gegensinnig öffnend gespritzt wird und anschließend zu einer gleichsinnigen Öffnung mit dem Schalenrand umgestülpt wird.

3. Verfahren zur Herstellung eines Pflanzentopfes im Kunststoff-Spritzverfahren, dadurch gekennzeichnet, daß der Schalenrand (6') unter Nutzung der im erwärmten Zustand gegebenen Beweglichkeit zur Ausbildung des Ringtellers (5) umgestülpt wird.

4. Verfahren zur Herstellung eines Pflanzentopfes im Kunststoff-Spritzverfahren, insbesondere nach Anspruch 1, dadurch gekennzeichnet, daß die im erwärmten Zustand gegebene Beweglichkeit des Schalenrandes des Ringtellers zum Herausziehen eines geteilten Querschiebers genutzt wird.

5. Pflanzentopf mit einem den Topfboden (4) unterfangenden Doppelboden (Schalenboden 7), der im Randbereich zur Bildung einer Schale (Sch) nach oben öffnend gekrümmt ist, welche etagenartig vertikal beabstandete Schale (Sch) zum Auffangen überschüssiger Gießflüssigkeit dient, wozu der Topfboden (4) Durchtrittsöffnungen (D) aufweist, dadurch gekennzeichnet, daß der Doppelboden (Schalenboden 7) einstückig an den Topfboden (4) angeformt ist.

6. Pflanzentopf, insbesondere nach Anspruch 3, dadurch gekennzeichnet, daß die Topfwandung (1) im Querschnitt im Bereich des gekrümmten Schalenrandes (6') des Doppelbodens (Schalenboden 7) stufenförmig eingezogen ist, unter im wesentlichen gleichbleibendem Abstand zu dem Schalenrand (6').

7. Pflanzentopf, insbesondere nach einem oder mehreren der vorhergehenden Ansprüche 3,4, dadurch gekennzeichnet, daß der Doppelboden (Schalenboden 7) in einem zentralen Bereich des Topfbodens (4) wurzelt.

8. Pflanzentopf, insbesondere nach einem oder mehreren der vorhergehenden Ansprüche 3 bis 5, dadurch gekennzeichnet, daß, ausgehend von dem zentralen Bereich des Topfbodens (4), rotationssymmetrisch sich gabelnde Spritzwege (a,b) ausgebildet sind.

9. Pflanzentopf, insbesondere nach einem oder mehreren der vorhergehenden Ansprüche 3 bis 6, dadurch gekennzeichnet, daß der Schalenrand (6') mit einer gedachten Verlängerung (1') der Topfwandung (1) fluchtet.

10. Pflanzentopf, vorzugsweise nach einem oder mehreren der vorhergehenden Ansprüche 3-7, dadurch gekennzeichnet, daß die Ringteller-Wandung (Schalenrand 6') eine stärkere Krümmung aufweist, als der korrespondierende Topfwandungsabschnitt.

11. Pflanzentopf, insbesondere nach einem oder mehreren der vorhergehenden Ansprüche, dadurch gekennzeichnet, daß der Schalenrand (6') mit einer Senkrechten (S) einen Winkel von ca. 15-30° einschließt.

12. Pflanzentopf, insbesondere nach einem oder mehreren der vorhergehenden Ansprüche, dadurch gekennzeichnet, daß die Wandstärke des Ringtellers zwischen 0,8 und 1 mm liegt.

13. Pflanzentopf, insbesondere nach einem oder mehreren der vorhergehenden Ansprüche, dadurch gekennzeichnet, daß am Fuß des Schalenrandes (6') eine Gelenkzone mit einer Wandstärke zwischen 0,3 und 0,7 mm ausgebildet ist.

# FIG.1

# FIG.2

# FIG.3

# FIG.4

FIG.5

# FIG.6

# FIG. 7

# FIG. 8

EP 0 381 023 A2

# FIG.9

EP 0 381 023 A2